# EUROPÄISCHE PATENTSCHRIFT

(11) **EP 4 463 329 B1**
(45) Veröffentlichungstag und Bekanntmachung des Hinweises auf die Patenterteilung: **25.02.2026**
(21) Anmeldenummer: 22843122.7
(22) Anmeldetag: 15.12.2022
(51) Int. Cl.: B60C 9/07, B60C 9/22, B60C 15/06

(54) **FAHRZEUGLUFTREIFEN**
PNEUMATIC TIRE
PNEUMATIQUE

(30) Priorität: 14.01.2022 DE 102022200360
(43) Veröffentlichungstag der Anmeldung: 20.11.2024
(73) Patentinhaber: Continental Reifen Deutschland GmbH, 30175 Hannover (DE)
(72) Erfinder: BERGER, Christoph, 30175 Hannover (DE); AHMED, Owais, 30175 Hannover (DE)
(74) Vertreter: Continental Corporation
(86) Internationale Anmeldenummer: PCT/DE2022/200302
(87) Internationale Veröffentlichungsnummer: WO 2023/134822

(56) Entgegenhaltungen:
- EP-A1- 3 725 565
- EP-A2- 0 820 882
- DE-T5- 112017 002 411
- JP-A- 2002 127 711
- JP-A- H03 292 202
- JP-A- H05 124 408

## Beschreibung

Die Erfindung betrifft einen Fahrzeugluftreifen.

Fahrzeugluftreifen bestehen aus einer Vielzahl von Reifenbauteilen. Zu diesen Reifenbauteilen zählt eine Reifenkarkasse, die Seitenwände, der Laufstreifen, ein Reifengürtel und eine Vielzahl von weiteren Bauteilen. Alle Reifenbauteile haben eine spezielle Funktion für den Fahrzeugluftreifen, damit dieser eine entsprechende Stabilität und z. B. eine vorgegebene Materialfestigkeit aufweist. Weiterhin ist es wichtig, dass der Fahrzeugluftreifen ein möglichst geringes Gewicht besitzt, damit der Rollwiderstand gering ist.

Die JP 2002 127711 A, JP H03 292202 A, DE 11 2017 002411 T5, EP 0 820 882 A2, EP 3 725 565 A1 und JP H05 124408 A offenbaren bekannte Reifenkonstruktionen.

Die US2011132514A1, EP0582196, AU671653 und EP3000624 offenbaren weitere bekannte Reifenkonstruktionen.

Der Erfindung lag die Aufgabe zugrunde, einen verbesserten Fahrzeugluftreifen bereitzustellen.

Insbesondere soll der Fahrzeugluftreifen ein möglichst geringes Gewicht aufweisen, wobei der Fahrzeugreifen gleichzeitig eine hohe Materialsteifigkeit bei Kurvenfahrten aufweisen soll.

Gelöst wird die Aufgabe gemäß Anspruch 1.

Ein Vorteil der Erfindung ist insbesondere darin zu sehen, dass durch die neue Reifenkonstruktion des Fahrzeugluftreifens der Fahrzeugreifen ein relativ geringes Gewicht und gleichzeitig eine hohe Materialsteifigkeit besitzt. Außerdem weist der Fahrzeugluftreifen eine hohe Stabilität und Materialfestigkeit im Bereich der Reifenkarkasse und unterhalb des Laufstreifens auf. Der Fahrzeugluftreifen besitzt ein relativ geringes Gewicht, da unterhalb des Laufstreifens nur noch eine Gürtellage oder gar keine Gürtellage vorgesehen wird.

Bei herkömmlichen Fahrzeugluftreifen umfasst der Reifengürtel mindestens zwei Gürtellagen. Bei der neuen Reifenkonstruktion wird maximal ein Reifengürtel mit einer Gürtellage unterhalb des Laufstreifens angeordnet.

Durch die neuartige Konstruktion der Reifenkarkasse mit der zentralen Karkasslage und der Seitenkarkasslage besitzt die Reifenkarkasse in Verbindung mit der besonderen Konstruktion und Materialhärte des Kernreiters eine sehr hohe Stabilität. Die Synergieeffekte aus der neuen Karkasskonstruktion mit der hohen Stabilität des Kernreiters führen im Ergebnis zu einem gewichtsreduzierten Fahrzeugreifen mit einer hohen Stabilität.

Durch die besondere Kernreiterkonstruktion wird effektiv eine Materialversteifung der Seitenwände erreicht, die wiederum zu einer erhöhten Schräglaufsteifigkeit des Fahrzeugsreifens führt.

In einer weiteren vorteilhaften Weiterbildung der Erfindung ist vorgesehen, dass die Höhenabmessung des Kernreiters in einem Bereich zwischen 5 bis 85 % der Gesamthöhe der Seitenwand liegt.

Durch die relativ lange Höhenabmessung des Kernreiters wird in der Seitenwand eine hohe Materialsteifigkeit erreicht.

In einer weiteren vorteilhaften Weiterbildung der Erfindung ist vorgesehen, dass die Höhenabmessung des Kernreiters in einem Bereich zwischen 20 bis 80 %, vorzugsweise ca. 40 - 50 %, der Gesamthöhe der Seitenwand liegt.

Bei dieser Höhenabmessung des Kernreiters wird eine verbesserte Materialsteifigkeit der Seitenwand erreicht.

In einer weiteren vorteilhaften Weiterbildung der Erfindung ist vorgesehen, dass der Kernreiter sich aus einem dreieckförmigen Teil und einem rechteckförmigen Teil zusammensetzt.

Dadurch lässt sich eine höhere Materialsteifigkeit für die Seitenwand erzielen.

In einer weiteren vorteilhaften Weiterbildung der Erfindung ist vorgesehen, dass die Höhenabmessung des rechteckförmigen Teiles des Kernreiters in einem Bereich zwischen 5 bis 80 % der Gesamthöhe der Seitenwand liegt. Dadurch trägt der rechteckförmige Teil des Kernreiters erheblich zur Materialsteifigkeit der Seitenwand bei.

In einer weiteren vorteilhaften Weiterbildung der Erfindung ist vorgesehen, dass im Reifenwulst ein Kernreiter mit einer Shore A Materialhärte von 75 bis 90 angeordnet ist.

Bei dieser Materialhärte des Kernreiters wird eine optimale Materialsteifigkeit für die Seitenwand erzielt.

In einer weiteren vorteilhaften Weiterbildung der Erfindung ist vorgesehen, dass die Festigkeitsträger der zentralen Karkasslage bezogen auf die Umfangsrichtung des Fahrzeugluftreifens einen Winkel im Bereich von 10° bis 70°, bevorzugt im Bereich von 15° bis 55°, besonders bevorzugt im Bereich von 20° bis 35°, aufweisen.

Bei dieser Ausrichtung der Festigkeitsträger der zentralen Karkasslage wird eine hohe Stabilität für die Reifenkarkasse erzielt.

In einer weiteren vorteilhaften Weiterbildung der Erfindung ist vorgesehen, dass die Reifenkarkasse zwei oder mehr Seitenkarkasslagen und zentrale Karkasslagen umfasst.

Zwei übereinander liegende Karkasslagen erhöhen die Stabilität der Reifenkarkasse.

Gemäss der Erfindung ist vorgesehen, dass die Enden der Seitenkarkasslagen im Bereich der Unterseite von den Reifenwülsten angeordnet sind.

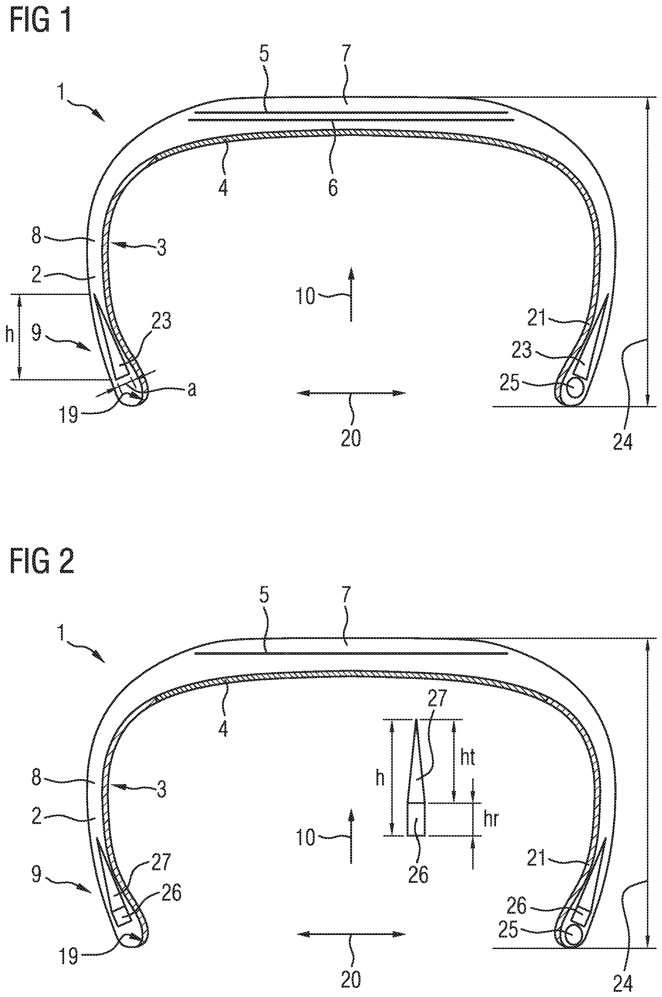

Ein entsprechendes Ausführungsbeispiel ist z.B. in der Figur 1 dargestellt. Bei dieser Ausführung wird die Reifenkarkasse im Bereich der Unterseite des Reifenwulstes 9 verankert.

In einer vorteilhaften Weiterbildung der Erfindung ist vorgesehen, dass die Festigkeitsträger der Gürtellage und die Festigkeitsträger der zentralen Karkasslage in Umfangsrichtung des Fahrzeugluftreifens gekreuzt angeordnet sind.

Durch die Kreuzung der Festigkeitsträger besitzt die Reifenkarkasse unterhalb des Laufstreifens eine hohe Stabilität.

Anhand von Ausführungsbeispielen wird die Erfindung im Folgenden näher beschrieben.

Es zeigen:
Fig. 1: Eine Reifenkonstruktion in einer Radialschnittansicht
Fig. 2: Ein weiteres Ausführungsbeispiel
Fig. 3: Eine Aufsicht auf die Ausrichtung der Festigkeitsträger der Reifenkarkasse

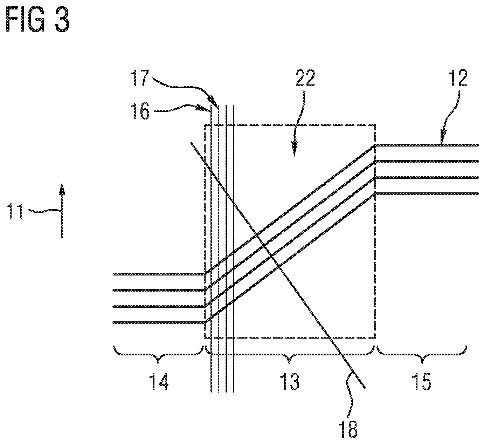

Die Figur 1 zeigt ein erstes Ausführungsbeispiel für die neue Reifenkonstruktion. Der Fahrzeugluftreifen 1 umfasst eine Reifenkarkasse 2 mit einer Seitenkarkasslage 3 und einer zentralen Karkasslage 4. Das besondere an der Reifenkarkasse 2 besteht darin, dass die Festigkeitsträger in der zentralen Karkasslage 4 keine radiale Ausrichtung besitzen. Die Festigkeitsträger in der Seitenkarkasslage 3 sind hingegen in radialer Richtung 10 ausgerichtet. Die Festigkeitsträger der zentralen Karkasslage 4 sind in einem Winkel zwischen 5 und 85° in Umfangsrichtung des Fahrzeugluftreifens 1 angeordnet. Die Ausrichtung der Festigkeitsträger ist insbesondere aus der Figur 3 ersichtlich. Auf der Innenseite der Reifenkarkasse 2 ist eine Reifeninnenschicht 21 angeordnet, die die Luftdichtigkeit des Fahrzeugluftreifens gewährleistet. Der Fahrzeugluftreifen weist zwei Seitenwände 8 und zwei Reifenwülste 9 auf. Oberhalb der Reifenkarkasse 2 kann optional über der zentralen Karkasslage 4 eine Verstärkungslage 5 aus einer Vielzahl von einzelnen Materialstreifen angeordnet sein. Der Fahrzeugluftreifen umfasst keinen Reifengürtel oder maximal einen Reifengürtel mit einer einzelnen Gürtellage 6. Außerdem umfasst der Fahrzeugluftreifen einen Laufstreifen 7. Die optionale Verstärkungslage 5 reicht bis in die Reifenschulter des Fahrzeugluftreifens und deckt zumindestens die zentrale Karkasslage 4 ab.

Die zentrale Karkasslage 4 besitzt eine sehr hohe Zugfestigkeit von ca. 20.000 bis 30.000 N/dm. Durch diese hohe Zugfestigkeit der zentralen Karkasslage besitzt der Fahrzeugluftreifen in Verbindung mit der neuen Karkasskonstruktion eine sehr hohe Materialsteifigkeit.

Im Reifenwulst 9 ist ein Wulstkern 25 angeordnet.

Die Darstellung des Wulstkernes im linken Reifenwulst ist weggelassen worden. Über den Wulstkernen 25 ist jeweils ein Kernreiter 23 angeordnet. Bei dieser Ausführung besitzt der Kernreiter eine dreieckförmige Kontur. Der Kernreiter erstreckt sich sehr weit über die Seitenwand 8. Die Höhenabmessung des Kernreiters beträgt h. Außerdem ist in der Figur die Höhenabmessung 24 der Seitenwand 8 dargestellt. Die Höhenabmessung h des Kernreiters 23 beträgt zwischen 5 und 85 % der Höhenabmessung 24 der Seitenwand. Vorzugsweise beträgt die Höhenabmessung h des Kernreiters 23, wie in der Figur 1 dargestellt, zwischen 30 und 50 % der Höhenabmessung 24 der Seitenwand.

Der Fahrzeugluftreifen weist dadurch insbesondere eine hohe Schräglaufsteifigkeit auf, die für Kurvenfahrten sehr vorteilhaft ist. Durch die hohe Schräglaufsteifigkeit lässt sich das Fahrzeug insgesamt besser manövrieren.

Die Figur 2 zeigt ein weiteres Ausführungsbeispiel. Bei dieser Reifenkonstruktion ist explizit kein Reifengürtel vorgesehen. Die Reifenkarkasse 2 umfasst eine Seitenkarkasslage 3 und eine zentrale Karkasslage 4.

Die Seitenkarkasslage 3 und die zentrale Karkasslage 4 unterscheiden sich in der Ausrichtung der Festigkeitsträger, wie es bereits bei der Figur 1 beschrieben worden ist.

Der Kernreiter besteht aus einem rechteckförmigen Teil 26 und einem angebundenen dreieckförmigen Teil 27. Die Gesamthöhe h des Kernreiters setzt sich aus der Höhe hr des rechteckförmigen Teiles 26 und der Höhe ht des angebundenen dreieckförmigen Teiles 27 zusammen.

Figur 3 zeigt eine schematische Darstellung des Verlaufs der Festigkeitsträger 12 der Reifenkarkasse, der Festigkeitsträger 17 der optionale Verstärkungslage und der Festigkeitsträger 18 der optionalen Gürtellage.

Es ist ein Teilausschnitt einer Aufsicht auf die schematisch dargestellte Reifenkarkasse abgebildet.

Die Ausrichtung der Festigkeitsträger in der Seitenkarkasslage im Bereich der Seitenwände ist mit den Klammern 14 und 15 dargestellt.

Die Ausrichtung der Festigkeitsträger in der zentralen Karkasslage im Bereich unter dem Laufstreifen ist mit der Klammern 13 dargestellt.

Die Umfangsrichtung des Fahrzeugluftreifens wird durch den Richtungspfeil 11 angedeutet.

Die Festigkeitsträger 12 verlaufen im Bereich 14 und 15 der Seitenkarkasslagen in radialer Richtung und bezogen auf die Umfangsrichtung 11 in einen Winkel von ca. 90°.

Im Gegensatz hierzu verlaufen die einzelnen Festigkeitsträger 12 in der zentralen Karkasslage weiterhin parallel zueinander, besitzen jedoch eine Neigung gegenüber der Umfangsrichtung 11.

Die Festigkeitsräger in der zentralen Karkasslage bilden mit der Umfangsrichtung einen Winkel, der kleiner ist als 90°.

Im gezeigten Beispiel wird mit der Umfangsrichtung 11 ein Winkel von etwa 52° gebildet.

Die zentrale Karkasslage weist im Bereich 13 eine Zugfestigkeit von ca. 20.000 bis 30.000 N/dm auf. Die Zugfestigkeit einer Karkasslage wird im Wesentlichen durch die Zugfestigkeit der einzelnen Festigkeitsträger 12 bestimmt. Die Zugfestigkeit der Karkasslage kann insbesondere dadurch bestimmt werden, dass ein Abschnitt der Karkasslage in einem Zugversuch getestet werden. Im Normalfall sind die Zugfestigkeiten der zentralen Karkasslage und der Seitenkarkasselage gleichgroß. Sie können jedoch auch unterschiedlich sein, indem beispielsweise der Materialdurchmesser der Festigkeitsträger in der Seitenkarkasslage geändert wird. Die Zugfestigkeit von über 20.000 N/dm ist erheblich größer als bei konventionellen Fahrzeugluftreifen. Dadurch besitzt der Fahrzeugluftreifen auch ohne Gürtellagen eine sehr hohe Materialsteifigkeit, insbesondere eine sehr hohe Schräglaufsteifigkeit.

In der Figur ist ebenfalls ein schematischer Materialstreifen 16 der optionalen Verstärkungslage dargestellt. Der Materialstreifen 16 umfasst eine Vielzahl von Festigkeitsträgern 17, die in das Gummimaterial des Materialstreifens 16 eingebettet sind. Die Festigkeitsträger 17 verlaufen im Wesentlichen in Umfangsrichtung 11 des Fahrzeugluftreifens. Eine Vielzahl von Materialstreifen 16 werden auf der Reifenkarkasse oberhalb der zentralen Karkasslage aufgespult. Die Materialstreifen 16 der Verstärkungslage besitzen eine hohe Durchstichfestigkeit gegenüber spitzen Gegenständen. In der Figur ist außerdem der Verlauf der Festigkeitsträger 18 einer optionalen Gürtellage dargestellt. Die Festigkeitsträger 18 der optionalen Gürtellage verlaufen gekreuzt zu den Festigkeitsträgern der zentralen Karkasslage und der Verstärkungslage. Durch die Kreuzung der Festigkeitsträger 18 und der Festigkeitsträger 12 der Reifenkarkasse wird eine hohe Stabilität der Reifenkarkasse unterhalb des Laufstreifens bewirkt.

### Bezugszeichenliste

- 1: Fahrzeugluftreifen
- 2: Reifenkarkasse
- 3: Seitenkarkasslage
- 4: Zentrale Karkasslage
- 5: Verstärkungslage aus einer Vielzahl von Materialstreifen
- 6: Gürtellage mit maximal einer Gürtellage
- 7: Laufstreifen
- 8: Seitenwand
- 9: Reifenwulst
- 10: Radiale Richtung
- 11: Umfangsrichtung
- 12: Festigkeitsträger der Reifenkarkasse
- 13: Ausrichtung der Festigkeitsträger in der zentralen Karkasslage
- 14: Ausrichtung der Festigkeitsträger in der Seitenkarkasslage im Bereich der linken Seitenwand
- 15: Ausrichtung der Festigkeitsträger in der Seitenkarkasslage im Bereich der rechten Seitenwand
- 16: Einzelner Materialstreifen der Verstärkungslage
- 17: Festigkeitsträger der Verstärkungslage
- 18: Festigkeitsträger der Gürtellage
- 19: Enden der Seitenkarkasslagen sind im Bereich der Unterseite von den Reifenwülsten angeordnet
- 20: Axiale Richtung
- 21: Reifeninnenschicht
- 22: Bereich der mit der Verstärkungslage abgedeckt wird
- 23: Kernreiter
- 24: Höhe bzw. Gesamthöhe der Seitenwand
- 25: Wulstkern bzw. Reifenkern
- 26: Rechteckförmiger Teil des Kernreiters
- 27: dreieckförmiger Teil des Kernreiters

- a: Breite des Kernreiters
- h: Höhe bzw. Gesamthöhe des Kernreiters
- hr: Höhe des rechteckförmigen Teil des Kernreiters
- ht: Höhe des dreieckförmigen Teil des Kernreiters

## Patentansprüche

1. Fahrzeugluftreifen (1), umfassend:
a) eine Reifenkarkasse (2) mit mindestens einer Karkasslage;
wobei in der Karkasslage eine Vielzahl Festigkeitsträgern angeordnet sind,
b) einen relativ zur Reifenkarkasse (2) außenliegenden Laufstreifen (7),
c) zwei Seitenwände (8),
d) zwei Reifenwülste (9) mit jeweils einem Reifenkern,
e) eine relativ zur Reifenkarkasse (2) radial innenliegende Reifeninnenschicht (21),
wobei der Fahrzeugluftreifen (1) maximal eine Gürtellage (6) aufweist,
wobei die Reifenkarkasse (2) im Bereich der Seitenwände (9) mindestens eine Seitenkarkasslage (3) mit in radialer Richtung ausgerichteten Festigkeitsträgern (12) und im Bereich unterhalb des Laufstreifens eine zentrale Karkasslage (4) aufweist,
wobei die Festigkeitsträger (12) der zentralen Karkasslage (4) in einem Winkel im Bereich von 5° bis 85° zur Umfangsrichtung (11) des Fahrzeugluftreifens angeordnet sind,
**dadurch gekennzeichnet, dass**,
im Reifenwulst (9) ein Kernreiter (23) mit einer Shore A Materialhärte von mindestens 70 angeordnet ist,
wodurch die Materialsteifigkeit der Seitenwände (8) verstärkt wird die Enden (19) der Seitenkarkasslagen (3) im Bereich der Unterseite von den Reifenwülsten (9) angeordnet sind,
wobei die zentrale Karkasslage eine Zugfestigkeit von ca. 20.000 bis 30.000 N/dm aufweist.

2. Fahrzeugluftreifen (1) nach Anspruch 1,
**dadurch gekennzeichnet, dass**
die Höhenabmessung des Kernreiters (23) in einem Bereich zwischen 5 bis 85 % der Gesamthöhe (24) der Seitenwand (8) liegt.

3. Fahrzeugluftreifen (1) nach einem der vorhergehenden Ansprüche, **dadurch gekennzeichnet, dass**
die Höhenabmessung (h) des Kernreiters (23) in einem Bereich zwischen 20 bis 80 % der Gesamthöhe (24) der Seitenwand liegt.

4. Fahrzeugluftreifen (1) nach einem der vorhergehenden Ansprüche, **dadurch gekennzeichnet, dass**
der Kernreiter (23) sich aus einem dreieckförmigen Teil (27) und einem rechteckförmigen Teil (26) zusammensetzt.

5. Fahrzeugluftreifen (1) nach einem der vorhergehenden Ansprüche, **dadurch gekennzeichnet, dass**
die Höhenabmessung (hr) des rechteckförmigen Teiles (26) des Kernreiters in einem Bereich zwischen 5 bis 80 % der Gesamthöhe (24) der Seitenwand (8) liegt.

6. Fahrzeugluftreifen (1) nach einem der vorhergehenden Ansprüche, **dadurch gekennzeichnet, dass**
im Reifenwulst (9) ein Kernreiter (23) mit einer Shore A Materialhärte von 75 bis 90 angeordnet ist.

7. Fahrzeugluftreifen nach einem der vorhergehenden Ansprüche,
**dadurch gekennzeichnet, dass**
die Festigkeitsträger (12) der zentralen Karkasslage (4) bezogen auf die Umfangsrichtung (11) des Fahrzeugluftreifens (1) einen Winkel im Bereich von 10° bis 70°, bevorzugt im Bereich von 15° bis 55°, besonders bevorzugt im Bereich von 20° bis 35°, aufweisen.

8. Fahrzeugluftreifen nach einem der vorhergehenden Ansprüche,
**dadurch gekennzeichnet, dass**
die Reifenkarkasse (2) zwei oder mehrere Seitenkarkasslagen (3) und zentrale Karkasslagen (4) umfasst.

## Claims

1. Pneumatic vehicle tyre (1), comprising:
a) a tyre carcass (2) with at least one carcass ply;
wherein a multiplicity of reinforcing elements are arranged in the carcass ply,
b) a tread (7) lying on the outside in relation to the tyre carcass (2),
c) two sidewalls (8),
d) two tyre beads (9) each with a tyre core,
e) an inner tyre layer (21), lying radially on the inside in relation to the tyre carcass (2),
wherein the pneumatic vehicle tyre (1) has a maximum of one belt ply (6), wherein the tyre carcass (2) has in the region of the sidewalls (9) at least one side carcass ply (3) with reinforcing elements (12) aligned in the radial direction and has in the region under the tread a central carcass ply (4),
wherein the reinforcing elements (12) of the central carcass ply (4) are arranged at an angle in the range from 5° to 85° to the circumferential direction (11) of the pneumatic vehicle tyre,
**characterized in that**
a bead filler (23) with a Shore A material hardness of at least 70 is arranged in the tyre bead (9),
whereby the material stiffness of the sidewalls (8) is increased,
the ends (19) of the side carcass plies (3) are arranged in the region of the underside of the tyre beads (9).
wherein the central carcass ply has a tensile strength of about 20,000 to 30,000 N/dm.

2. Pneumatic vehicle tyre (1) according to Claim 1,
**characterized in that**
the height dimension of the bead filler (23) lies in a range between 5 and 85% of the overall height (24) of the sidewall (8).

3. Pneumatic vehicle tyre (1) according to one of the preceding claims, **characterized in that**
the height dimension (h) of the bead filler (23) lies in a range between 20 and 80% of the overall height (24) of the sidewall.

4. Pneumatic vehicle tyre (1) according to one of the preceding claims, **characterized in that**
the bead filler (23) is made up of a triangular part (27) and a rectangular part (26).

5. Pneumatic vehicle tyre (1) according to one of the preceding claims, **characterized in that**
the height dimension (hr) of the rectangular part (26) of the bead filler lies in a range between 5 and 80% of the overall height (24) of the sidewall (8).

6. Pneumatic vehicle tyre (1) according to one of the preceding claims, **characterized in that**
a bead filler (23) with a Shore A material hardness of 75 to 90 is arranged in the tyre bead (9).

7. Pneumatic vehicle tyre according to one of the preceding claims, **characterized in that**
the reinforcing elements (12) of the central carcass ply (4) have with respect to the circumferential direction (11) of the pneumatic vehicle tyre (1) an angle in the range from 10° to 70°, preferably in the range from 15° to 55°, particularly preferably in the range from 20° to 35°.

8. Pneumatic vehicle tyre according to one of the preceding claims, **characterized in that**
the tyre carcass (2) comprises two or more side carcass plies (3) and central carcass plies (4).

## Revendications

1. Pneumatique (1) de véhicule, comprenant :
a) une carcasse (2) de pneu avec au moins une nappe de carcasse ;
une pluralité de renforts étant disposés dans la nappe de carcasse,
b) une bande de roulement (7) située à l'extérieur par rapport à la carcasse (2) de pneu,
c) deux parois latérales (8),
d) deux talons (9) de pneu avec respectivement un noyau de pneu,
e) une couche intérieure (21) de pneu située radialement à l'intérieur par rapport à la carcasse (2) de pneu,
le pneumatique (1) de véhicule comportant au maximum une nappe de ceinture (6),
la carcasse (2) de pneu comportant dans la zone des parois latérales (9) au moins une nappe de carcasse latérale (3) avec des renforts (12) orientés dans la direction radiale et, dans la zone sous la bande de roulement, une nappe de carcasse centrale (4),
les renforts (12) de la nappe de carcasse centrale (4) étant disposés selon un angle dans la plage de 5° à 85° par rapport à la direction périphérique (11) du pneumatique de véhicule,
**caractérisée en ce que**
un bourrage sur tringle (23) avec une dureté de matériau Shore A d'au moins 70 est agencé dans le talon (9) de pneu,
permettant de renforcer ainsi la rigidité de matériau des parois latérales (8),
les extrémités (19) des nappes de carcasse latérales (3) sont disposées dans la zone du côté inférieur des talons (9) de pneu.
la couche centrale de carcasse présentant une résistance à la traction d'environ 20 000 à 30 000 N/dm.

2. Pneumatique (1) de véhicule selon la revendication 1,
**caractérisé en ce que**
la dimension en hauteur du bourrage sur tringle (23) se situe dans une plage entre 5 à 85 % de la hauteur totale (24) de la paroi latérale (8).

3. Pneumatique (1) de véhicule selon l'une des revendications précédentes, **caractérisé en ce que**
la dimension en hauteur (h) du bourrage sur tringle (23) se situe dans une plage entre 20 à 80 % de la hauteur totale (24) de la paroi latérale.

4. Pneumatique (1) de véhicule selon l'une des revendications précédentes, **caractérisé en ce que**
le bourrage sur tringle (23) se compose d'une partie triangulaire (27) et d'une partie rectangulaire (26).

5. Pneumatique (1) de véhicule selon l'une des revendications précédentes, **caractérisé en ce que**
la dimension en hauteur (hr) de la partie rectangulaire (26) du bourrage sur tringle se situe dans une plage entre 5 à 80 % de la hauteur totale (24) de la paroi latérale (8).

6. Pneumatique (1) de véhicule selon l'une des revendications précédentes, **caractérisé en ce que**
un bourrage sur tringle (23) avec une dureté de matériau Shore A de 75 à 90 est disposé dans le talon (9) de pneu.

7. Pneumatique de véhicule selon l'une des revendications précédentes, **caractérisé en ce que**
les renforts (12) de la nappe de carcasse centrale (4) présentent par rapport à la direction périphérique (11) du pneumatique (1) de véhicule un angle dans la plage de 10° à 70°, de manière préférée dans la plage de 15° à 55°, de manière particulièrement préférée dans la plage de 20° à 35°.

8. Pneumatique de véhicule selon l'une des revendications précédentes, **caractérisé en ce que**
la carcasse (2) de pneumatique comprend deux ou plusieurs nappes de carcasse latérales (3) et des nappes de carcasse centrales (4).
